# EUROPÄISCHE PATENTSCHRIFT

(11) **EP 1 629 221 B1**
(45) Veröffentlichungstag und Bekanntmachung des Hinweises auf die Patenterteilung: **31.08.2011**
(21) Anmeldenummer: 04734522.8
(22) Anmeldetag: 24.05.2004
(51) Int. Cl.: F16H 25/22

(54) **KUGELGEWINDETRIEB**
BALL SCREW
VIS D'ENTRAINEMENT A BILLES

(30) Priorität: 30.05.2003 DE 10324465
(43) Veröffentlichungstag der Anmeldung: 01.03.2006
(73) Patentinhaber: Schaeffler Technologies GmbH & Co. KG, 91074 Herzogenaurach (DE)
(72) Erfinder: OSTERLÄNGER, Jürgen, 91448 Emskirchen (DE); ADLER, Dieter, 91074 Herzogenaurach (DE); KRAUS, Manfred, 91074 Herzogenaurach (DE)
(86) Internationale Anmeldenummer: PCT/EP2004/005613
(87) Internationale Veröffentlichungsnummer: WO 2004/106775

(56) Entgegenhaltungen:
- EP-A- 1 279 866
- DE-A- 19 944 875
- US-A1- 2003 061 893
- SMI: ""catalog"" [Online] Februar 2003 (2003-02), , XP002293174 Gefunden im Internet: URL:http://www.smi4motion.com/2Products/PD F/SMI%20General%20Catalog%201.02.03.pdf> [gefunden am 2004-08-19] Seite 53
- PATENT ABSTRACTS OF JAPAN Bd. 2003, Nr. 09, 3. September 2003 (2003-09-03) -& JP 2003 137112 A (NTN CORP), 14. Mai 2003 (2003-05-14)
- KML: "Lineartechnikkomponenten"[Online] 22. Oktober 2003 (2003-10-22), XP002293002 Gefunden im Internet: URL:http://web.archive.org/web/20031022224 146/http://www.kml.at/ltk/ltk4Kugelgewinde triebe.html> [gefunden am 2004-08-28]
- NSK: "Ball screws" [Online] 15. Dezember 2003 (2003-12-15), , XP002293205 Gefunden im Internet: URL:http://web.archive.org/web/*/http://ww w.onexiainc.com/pdf/NSK_Ball_Screws.pdf> [gefunden am 2004-08-18] Seiten 45,183 & NSK: "Ball screws" [Online] 24. Oktober 2002 (2002-10-24), Gefunden im Internet: URL:http://www.nsk.com/eng/products/catalo g/eseiki/ebs/ebs_top.pdf> [gefunden am 2004-08-18]
- PATENT ABSTRACTS OF JAPAN Bd. 1998, Nr. 11, 30. September 1998 (1998-09-30) & JP 10 153245 A (NIPPON SEIKO KK), 9. Juni 1998 (1998-06-09)
- INA: "Nadelrollen NRB"[Online] XP002293003 Gefunden im Internet: URL:http://medias.ina.de/medias/de!hp.info .body/NRB*UK*4> [gefunden am 2004-08-18]
- MANNESMANN REXROTH DEUTSCHE STAR: "Präzisions-Kugelgewindetriebe mit Endenlagerungen und Gehäusen" 1994, , SCHWEINFURT , XP002293004 das ganze Dokument
- NEFF: "Screw Drives" [Online] Februar 2003 (2003-02), , XP002293175 Gefunden im Internet: URL:http://www.sbaab.se/pdf/ina_kulskruv.p df> [gefunden am 2004-08-18]
- THK: "High speed ball screw with caged ball technology" [Online] Februar 2002 (2002-02), , XP002293176 Gefunden im Internet: URL:http://www.thk.co.jp/archive_file/tech nical_dl/pdf_en/SBN(E).pdf> [gefunden am 2004-08-18] das ganze Dokument
- DANAHER MOTION THOMSON: "Präzisions-Kugelgewindetriebe" [Online] Februar 2003 (2003-02), , XP002293179 Gefunden im Internet: URL:http://www.danaherlinear.com/PDFs/Cata logs_and_Brochures/Ballscrew_Catalog_Europ ean.pdf> [gefunden am 2004-08-18]

## Beschreibung

Die vorliegende Erfindung betrifft einen Kugelgewindetrieb. Die Erfindung betrifft beispielsweise solche Kugelgewindetriebe, die neuerdings in elektromechanischen Lenkgetrieben von Kraftfahrzeugen eingesetzt werden. Bei derartigen Anwendungen kann die Spindelmutter elektromotorisch angetrieben werden, wobei unter der Drehung der Spindelmutter die Spindel linear verschoben wird.

Die JP 2003 137112 A wird als nächstliegenden stand der Technik angesehen.

Aus DE 101 40 884 A1 beispielsweise ist ein Kugelgewindetrieb bekannt geworden. Bei derartigen Kugelgewindetrieben treten bei insbesondere schnellen Drehbewegungen der Spindelmutter Laufgeräusche auf. Ursache für diese Laufgeräusche sind oftmals stoßartige Kontakte der Kugeln untereinander, aber auch Stoßkontakte der Kugeln im Umlenkkanal der Spindelmutter. Derartige Laufgeräusche werden insbesondere in der Anwendung derartiger Kugelgewindetriebe in elektromechanischen Lenkgetrieben als störend empfunden. Aufgabe der vorliegenden Erfindung ist es daher, einen Kugelgewindetrieb nach den Merkmalen des Oberbegriffs des Anspruchs 1 anzugeben, bei dem Laufgeräusche reduziert sind.

Die Erfindung sieht Maßnahmen zur Lösung dieses Problems vor, die die Laufgeräusche deutlich reduzieren.

Es wird vorgeschlagen, dass das Verhältnis der Steigerung der Gewindebahn zum Durchmesser der Kugeln zwischen 1,02 und 1,2 beträgt. Bei diesem Verhältnis können größtmögliche Kugeln eingesetzt werden. Große Kugeln laufen im Kugelgewindetrieb ruhiger als Kugeln mit kleinerem Durchmesser. Diese Maßnahme trägt ebenfalls zur Reduzierung der Laufgeräusche bei. Der vorgeschlagene Bereich trägt in besonderer Weise zu einem geräuscharmen Verlauf der Kugeln bei.

Als weitere Maßnahme wird vorgeschlagen, dass die Gewindenuten sowohl der Spindelmutter als auch der Spindel jeweils ein gotisches Profil aufweisen, wobei ein Druckwinkel der Kugeln im Kontakt mit dem gotischen Profil zwischen 15 und 35° beträgt. Bei diesen kleinen Druckwinkeln entstehen flache Gewinderillen, so dass insbesondere im Umlenkbereich der Kugeln ein nur noch geringes Anheben der Kugeln erforderlich ist. Demzufolge ist eine harmonische Kugelführung auch im Umlenkbereich der Kugeln möglich. Ferner kann die Bauhöhe der Spindelmutter reduziert werden. Im Umlenkbereich wird die Kugeln von der Gewindenut der Spindel abgehoben und in den Umlenkkanal hineingeführt. Bei dem vorgeschlagenen Bereich des Druckwinkels wurde herausgefunden, dass Laufgeräusche gegenüber anderen Druckwinkeln deutlich reduziert sind. Diese Maßnahmen haben sämtlich gemeinsam, dass sie die Bahn der Kugeln und Kugelbewegungen gezielt beeinflussen.

Der Umlenkkanal ist vorzugsweise von einer Umlenknut der Spindelmutter begrenzt, wobei diese Umlenknut ebenfalls ein gotisches Profil aufweist, das ebenfalls vorzugsweise einen Druckwinkel zwischen 25 und 35° aufweist. Die Umlenknut kann in üblicher Weise an einem Umlenkstück ausgebildet sein, das in einer Ausnehmung der Spindelmutter angeordnet ist.

Nachstehend wird die Erfindung anhand eines in insgesamt drei Figuren dargestellten Ausführungsbeispiels näher erläutert. Es zeigen:
- Figur 1: einen Längsschnitt durch einen erfindungsgemäßen Ku- gelgewindetrieb,
- Figur 2: einen Querschnitt durch den Kugelgewindetrieb und
- Figur 3: in vergrößerter Darstellung einen Teillängsschnitt des er- findungsgemäßen Kugelgewindetriebes.

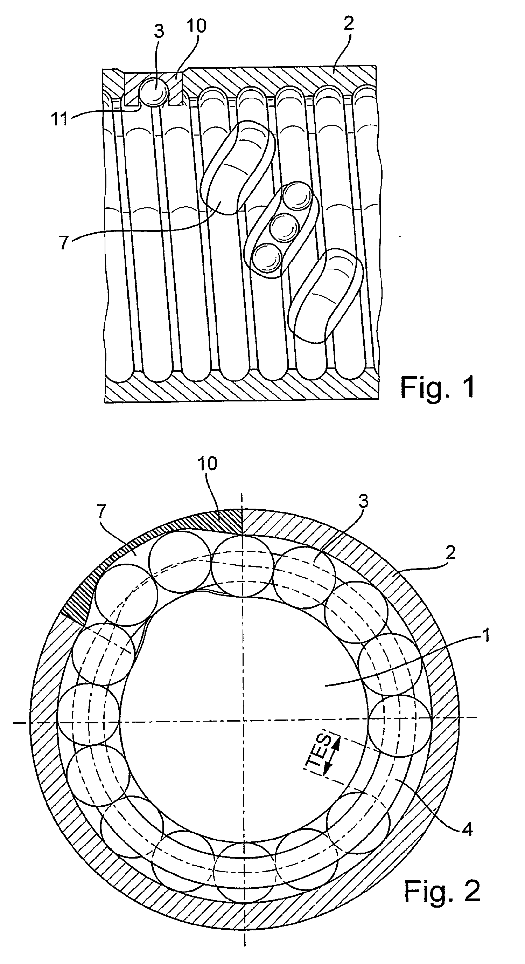

Der in den Figuren 1 bis 3 dargestellte erfindungsgemäße Kugelgewindetrieb umfasst eine auf einer Spindel 1 angeordnete Spindelmutter 2, sowie in einer Kugelreihe angeordnete Kugeln 3, die in einer Gewindebahn 4 abrollbar angeordnet sind. Die Gewindebahn 4 ist durch eine an der Spindel 1 ausgebildete Gewindenut 5 und durch eine an der Spindelmutter 2 ausgebildete Gewindenut 6 begrenzt. Die in Kugelreihe angeordneten Kugeln 3 werden in einem Umlenkkanal 7 der Spindelmutter 2 von einem Auslaufende hin zu einem Einlaufende einer gemeinsamen Windung der Gewindebahn 4 umgelenkt.

In der Figur 2 ist das Teilkreisendspiel (TES) zwischen der ersten und der letzten Kugel einer Kugelreihe deutlich abgebildet. Dieses Teilkreisendspiel, ist erfindungsgemäß kleiner oder gleich 0,3 mm. In der Abbildung ist dieses Teilkreisendspiel lediglich aus Gründen der Anschaulichkeit in übertriebener Wei.-se dargestellt.

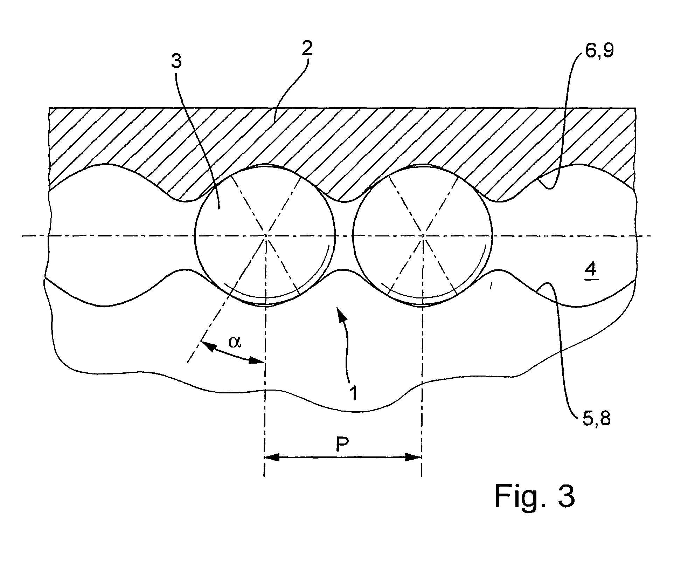

Figur 3 kann entnommen werden, dass die Gewindenuten 5 und 6 der Spindel 1 und der Spindelmutter 2 jeweils mit einem gotischen Profil 8, 9 versehen sind. Dieses gotische Profil ermöglicht eine geometrisch exakte Führung, der Kugeln entlang der Gewindebahn 4. Der Druckwinkel α der Kugeln 3 im Kontakt mit dem gotischen Profil 8, 9 der Gewindenuten 5, 6 beträgt vorzugsweise zwischen 25 und 35°. Ferner ist das Verhältnis der Steigung P zum Durchmesser der Kugeln 3 zwischen 1,02 und 1,2 gewählt.

Den Figuren 1 und 2 kann entnommen werden, dass im Umlenkbereich der Kugeln 3 ein Umlenkstück 10 angeordnet ist. Dieses Umlenkstück 10 weist eine den Umlenkkanal 7 begrenzende Umlenknut 11 auf, an der die Kugeln 3 abwälzen. Diese Umlenknut 11 ist ebenfalls mit einem nicht weiter dargestellten gotischen Profil versehen, wie es auch bei den Gewindenuten 5 und 6 der Spindel 1 und der Spindelmutter 2 vorgesehen sind. Das gotische Profil dieser Umlenknut weist ebenfalls einen Druckwinkel im Kontakt mit den Kugeln auf, der zwischen 15 und 35° beträgt.

Der hier abgebildete und beschriebene Kugelgewindetrieb zeichnet sich durch eine besondere Laufruhe aus. Dieser erfindungsgemäße Kugelgewindetrieb eignet sich daher in besonderer Weise für den Einsatz in elektromechanischen Lenkgetrieben.

Anstelle des hier beispielhaft beschriebenen Kugelgewindetriebs mit Innenumlenkung kann auch ein Kugelgewindetrieb mit Außenumlenkung vorgesehen werden, wobei ein rohrförmiges Umlenkstück radial außerhalb der Gewindenut der Spindelmutter angeordnet ist.

### Bezugszahlen

- 1: Spindel
- 2: Spindelmutter
- 3: Kugel
- 4: Gewindebahn
- 5: Gewindenut
- 6: Gewindenut
- 7: Umlenkkanal
- 8: gotisches Profil
- 9: gotisches Profil
- 10: Umlenkstück
- 11: Umlenknut

## Patentansprüche

1. Kugelgewindetrieb mit einer auf einer Spindel (1) angeordneten Spindelmutter (2), sowie mit in einer Kugelreihe angeordneten Kugeln (3), die in einer Gewindebahn (4) abrollbar angeordnet sind, wobei die Gewindebahn (4) durch eine an der Spindel (1) ausgebildete Gewindenut (5) und durch eine an der Spindelmutter (2) ausgebildete Gewindenut (6) begrenzt ist, wobei die in Kugelreihe angeordneten Kugeln (3) in einem Umlenkkanal (7) von einem Auslaufende hin zu einem Einlaufende einer gemeinsamen Windung der Gewindebahn (4) umgelenkt werden, **dadurch gekennzeichnet, dass** das Verhältnis der Steigung der Gewindebahn (4) zum Durchmesser der Kugeln (3) zwischen 1,02 und 1,2 liegt.

2. Kugelgewindetrieb nach Anspruch 1, bei dem die Gewindenuten (5, 6) der Spindelmutter (2) und der Spindel (1) jeweils ein gotisches Profil (8,9) aufweisen, wobei ein Druckwinkel der Kugeln (3) im Kontakt mit dem gotischen Profil (8, 9) zwischen 15 und 35 Grad beträgt.

3. Kugelgewindetrieb nach Anspruch 2, bei dem der Umtenkanal (7) von einer an der Spindelmutter (2) vorgesehenen Umlenknut (11) begrenzt ist, an der die Kugeln (3) abwälzen, wobei die Umlenknut (11) ein gotisches Profil aufweist.

4. Kugelgewindetrieb nach Anspruch 2, bei dem ein Druckwinkel der Kugeln (3) im Kontakt mit dem gotischen Profil der Umlenknut (11) zwischen 25 und 35 Grad beträgt.

5. Kugelgewindetrieb nach Anspruch 3, bei dem die Umlenknut (11) an einem Umlenkstück (10) ausgebildet ist, das in einer Ausnehmung der Spindelmutter (2) angeordnet ist.

## Claims

1. Ball screw having a spindle nut (2) arranged on a spindle (1), together with balls (3) which are arranged in a series and are capable of rolling in a helical ball track (4), the helical ball track (4) being defined by a thread groove (5) formed on the spindle (1) and by a thread groove (6) formed on the spindle nut (2), the balls (3) arranged in a series being returned in a return duct (7) from an outlet end to an inlet end of a common turn of the helical ball track (4), **characterized in that** the ratio between the pitch of the helical ball track (4) and the diameter of the balls (3) ranges from 1.02 to 1.2.

2. Ball screw according to Claim 1, in which the thread grooves (5, 6) of the spindle nut (2) and of the spindle (1) in each case have a gothic profile (8, 9), a pressure angle formed by the balls (3) in contact with the gothic profile (8, 9) ranging from 15 to 35 degrees.

3. Ball screw according to Claim 2, **characterized in that** the return duct (7) is defined by a return groove (11) which is provided on the spindle nut (2) and on which the balls (3) roll, the return groove (11) having a gothic profile.

4. Ball screw according to Claim 2, **characterized in that** a pressure angle formed by the balls (3) in contact with the gothic profile of the return groove (11) ranges from 25 to 35 degrees.

5. Ball screw according to Claim 3, **characterized in that** the return groove (11) is formed on a return piece (10), which is arranged in a recess in the spindle nut (2).

## Revendications

1. Vis d'entraînement à billes comprenant une vis-mère (2) disposée sur une broche (1) ainsi que des billes (3) disposées dans une rangée de billes, qui sont disposées de manière à pouvoir rouler dans une piste filetée (4), la piste filetée (4) étant limitée par une rainure filetée (5) réalisée sur la broche (1) et par une rainure filetée (6) réalisée sur la vis-mère (2), les billes (3) disposées dans la rangée de billes étant renvoyées dans un canal de renvoi (7) depuis une extrémité de sortie jusqu'à une extrémité d'entrée d'un enroulement commun de la piste filetée (4), **caractérisée en ce que** le rapport du pas de la piste filetée (4) au diamètre des billes (3) est compris entre 1,02 et 1,2.

2. Vis d'entraînement à billes selon la revendication 1, dans laquelle les rainures filetées (5, 6) de la vis-mère (2) et de la broche (1) présentent à chaque fois un profil gothique (8, 9), un angle de pression des billes (3) en contact avec le profil gothique (8, 9) étant compris entre 15 et 35 degrés.

3. Vis d'entraînement à billes selon la revendication 2, dans laquelle le canal de renvoi (7) est limité par une rainure de renvoi (11) prévue sur la vis-mère (2), sur laquelle roulent les billes (3), la rainure de renvoi (11) présentant un profil gothique.

4. Vis d'entraînement à billes selon la revendication 2, dans laquelle un angle de pression des billes (3) en contact avec le profil gothique de la rainure de renvoi (11) est compris entre 25 et 35 degrés.

5. Vis d'entraînement à billes selon la revendication 3, dans laquelle la rainure de renvoi (11) est réalisée sur une pièce de renvoi (10) qui est disposée dans un évidement de la vis-mère (2).
